# EUROPEAN PATENT SPECIFICATION

(11) **EP 3 932 958 B1**
(45) Date of publication and mention of the grant of the patent: **28.09.2022**
(21) Application number: 21156460.4
(22) Date of filing: 11.02.2021
(51) Int. Cl.: C08F 136/06, C08C 2/06

(54) **METHOD FOR CONTINUOUSLY PREPARING NICKEL CATALYSED CIS-POLYBUTADIENE AND RARE EARTH CATALYSED CIS-POLYBUTADIENE**
VERFAHREN ZUR KONTINUIERLICHEN HERSTELLUNG VON NICKELKATALYSIERTEM CIS-POLYBUTADIEN UND SELTENERD-KATALYSIERTEM CIS-POLYBUTADIEN
PROCÉDÉ DE PRÉPARATION EN CONTINU DE CIS-POLYBUTADIÈNE CATALYSÉ AU NICKEL ET DE CIS-POLYBUTADIÈNE CATALYSÉ AUX TERRES RARES

(30) Priority: 01.07.2020 CN 202010620031
(43) Date of publication of application: 05.01.2022
(73) Proprietor: Zhejiang Transfar Synthetic Material Co., Ltd., Jiaxing, Zhejiang 314000 (CN)
(72) Inventor: Chen, Huafeng, Jiaxing, Zhejiang 314000 (CN); Zhou, Jiahai, Jiaxing, Zhejiang 314000 (CN); Gao, Jiuqi, Jiaxing, Zhejiang 314000 (CN); Zhu, Jianhua, Jiaxing, Zhejiang 314000 (CN)
(74) Representative: Petraz, Gilberto Luigi

(56) References cited:
- EP-A1- 1 092 735
- EP-A1- 1 134 233
- DATABASE WPI Week 201983 Thomson Scientific, London, GB; AN 2019-85280J XP002803634, & CN 110 294 869 A (CHINA PETROLEUM & CHEM CORP) 1 October 2019 (2019-10-01)
- DATABASE WPI Week 201421 Thomson Scientific, London, GB; AN 2013-S42498 XP002803635, & CN 103 172 789 A (WANDA GROUP CO LTD) 26 June 2013 (2013-06-26)

## Description

### TECHNICAL FIELD

The present disclosure relates to *cis*-polybutadiene, in particular to a method for continuously preparing nickel catalysed *cis*-polybutadiene and rare earth catalysed *cis*-polybutadiene.

### BACKGROUND

*Cis*-polybutadiene is a synthetic rubber having a uniform structure polymerized from butadiene monomers. The *cis*-polybutadiene can be divided into nickel catalysed *cis*-polybutadiene, cobalt catalysed *cis*-polybutadiene, titanium catalysed *cis*-polybutadiene and rare earth catalysed (such as neodymium catalysed) *cis-*polybutadiene.

Both nickel catalysed *cis*-polybutadiene and rare earth catalysed *cis-*polybutadiene can be synthesized by a continuous solution polymerization technology. However, due to difference of catalyst systems between nickel-based catalysts and rare-earth-based catalysts, nickel catalysed *cis*-polybutadiene and rare earth catalysed *cis-*polybutadiene are generally prepared with different polymerization equipment. Even if nickel catalysed *cis*-polybutadiene and rare earth catalysed *cis*-polybutadiene are prepared by a same set of polymerization equipment, the polymerization equipment should be shut down to clear a kettle to switch the production of rubber types. It takes a lot of time and costs much money.

### SUMMARY

A method for continuously preparing nickel catalysed *cis*-polybutadiene and rare earth catalysed *cis*-polybutadiene as defined in the specific claims is provided in the present disclosure. By this method, preparation of nickel catalysed *cis*-polybutadiene and preparation of rare earth catalysed *cis*-polybutadiene can be alternatively carried out in a same set of polymerization equipment without stopping the preparation and cleaning the polymerization equipment. Besides, both the activity of the nickel-based catalyst and the activity of the rare earth-based catalyst will not be affected.

A method for preparing nickel catalysed *cis*-polybutadiene and rare earth catalysed *cis*-polybutadiene, including:
S1, providing a set of polymerization equipment including a polymerization unit and an agglomeration unit;
S2, preparing a nickel catalysed *cis*-polybutadiene by following steps:
   S21, adding butyl oil, nickel-based catalyst into the polymerization unit to obtain a nickel catalysed *cis*-polybutadiene liquid;
   S22, adding the nickel catalysed *cis*-polybutadiene liquid into the agglomeration unit to agglomerate, and obtaining the nickel catalysed *cis*-polybutadiene; and
S3, preparing a rare earth catalysed *cis*-polybutadiene by following steps without cleaning the polymerization equipment:
   S31, adding butyl oil, rare earth-based catalyst into the polymerization unit to obtain a rare earth catalysed *cis*-polybutadiene liquid;
   S32, adding the rare earth catalysed *cis*-polybutadiene liquid into the agglomeration unit to agglomerate, and obtaining the rare earth catalysed *cis*-polybutadiene,
   wherein in the step S2 and step S3, the butyl oil includes a butadiene monomer and a solvent, a mass ratio of an oxygen containing compound of the butyl oil to the butyl oil is less than or equal to 20 mg : 1 kg, and a mass ratio of water of the butyl oil to the butyl oil is less than or equal to 50 mg : 1 kg, and
   step S2 and step S3 are interchangeable, and an interchange is performed without stopping and cleaning the polymerization equipment, so that the polymerization is continuous.

Furthermore, the polymerization equipment further includes a refining unit and the butyl oil is prepared by refining the butadiene monomer and the solvent in the refining unit.

Furthermore, the step S21 of adding butyl oil, nickel-based catalyst into the polymerization unit to obtain the nickel catalysed *cis*-polybutadiene liquid includes following steps:
S211, mixing a nickel-containing agent and an aluminium-containing agent in a first aging unit and aging to obtain a first aging liquid;
S212, mixing the butyl oil and the first aging liquid in a static mixer to obtain a first mixture; and
S213, adding the first mixture and a boron-containing agent into the polymerization unit and polymerizing to obtain the nickel catalysed *cis*-polybutadiene liquid.

Furthermore, in the step S3, a mass ratio of water of the butyl oil to the butyl oil is less than or equal to 40 mg : 1 kg.

Furthermore, the step S31 of adding butyl oil, rare earth-based catalyst into the polymerization unit to obtain the rare earth catalysed *cis*-polybutadiene liquid includes following steps:
S311, mixing a rare earth-based catalyst precursor in a second aging unit to obtain the rare earth-based catalyst, and aging the obtained rare earth-based catalyst to obtain a second aging liquid;
S312, mixing the butyl oil and the second aging liquid in a static mixer to obtain a second mixture; and
S313, adding the second mixture into the polymerization unit and polymerizing to obtain the rare earth catalysed *cis*-polybutadiene liquid.

Furthermore, in the step S312, further adding a first stabilizer into the static mixer, wherein the first stabilizer includes aluminium alkyl.

Furthermore, in the step S313, further adding a second stabilizer into the polymerization unit, wherein the second stabilizer includes aluminium alkyl.

Furthermore, in the step S313, further adding a second stabilizer into the polymerization unit, wherein the second stabilizer includes aluminium alkyl.

Furthermore, the step S3 of preparing the rare earth catalysed *cis-*polybutadiene further comprises adding a terminator into the rare earth catalysed *cis-*polybutadiene.

Furthermore, a mass of the terminator is less than or equal to 5% of a mass of the butadiene monomer.

Furthermore, in the step S21 and step S31, further including adding a molecular weight regulator into the polymerization unit, wherein the molecular weight regulator includes at least one of 1,2-butadiene, cyclooctadiene, aluminium alkyl, aluminium alkyl hydride and zinc alkyl.

Furthermore, after step S32, further including a step of adding a viscosity reducing agent into the rare earth catalysed *cis*-polybutadiene liquid.

Furthermore, after step S21 and before step S22, further including a step of adding an anti-oxidant into the nickel catalysed *cis*-polybutadiene liquid.

Furthermore, after step S31 and before step S32, further including a step of adding an anti-oxidant into the rare earth catalysed *cis*-polybutadiene liquid.

In the present disclosure, concentration of oxygen containing compound and concentration of water in the butyl oil are controlled, so as to protect the activity of rare earth-based catalyst after changing polymerization of nickel catalysed *cis*-polybutadiene to polymerization of rare earth catalysed *cis*-polybutadiene, and to protect the activity of nickel-based catalyst after changing polymerization of rare earth catalysed *cis-*polybutadiene to polymerization of nickel catalysed *cis*-polybutadiene. Therefore, by continuously adding butyl oil into the polymerization unit while alternatively adding nickel-based catalyst and rare earth-based catalyst, preparation of nickel catalysed *cis-*polybutadiene and preparation of rare earth catalysed *cis*-polybutadiene can be alternatively carried out in a same set of polymerization equipment without stopping the preparation thereof and cleaning the polymerization equipment. Besides, both the activity of the nickel-based catalyst and the activity of the rare earth-based catalyst will not be affected.

### BRIEF DESCRIPTION OF THE DRAWINGS

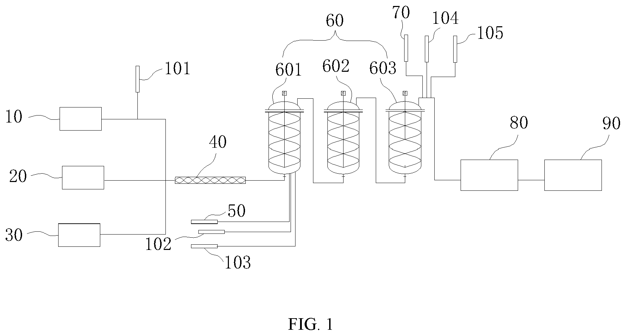

FIG. 1 is a schematic diagram of a polymerization equipment of the present disclosure.

In FIG.1, 10 represents a refining unit; 20 represents a first aging unit; 30 represents a second aging unit; 40 represents a static mixer; 50 represents a boron-containing agent feed pipe; 60 represents a polymerization unit; 70 represents a terminator feed pipe; 80 represents an agglomeration unit; 90 represents a post-processing unit; 101 represents a first stabilizer feed pipe; 102 represents a molecular weight regulator feed pipe; 103 represents a second stabilizer feed pipe; 104 represents an anti-oxidant feed pipe; 105 represents a viscosity reducing agent feed pipe; 601 represents a first polymerization reactor; 602 represents a middle polymerization reactor; and 603 represents a last polymerization reactor.

### DETAILED DESCRIPTION

A method for continuously preparing the nickel catalysed *cis*-polybutadiene and the rare earth catalysed *cis*-polybutadiene of the present disclosure will be further illustrated in conjunction with the drawings hereinafter.

The present disclosure provides a method for preparing nickel catalysed *cis-*polybutadiene and rare earth catalysed *cis*-polybutadiene, including: S1, providing a set of polymerization equipment including a polymerization unit and an agglomeration unit; S2, preparing a nickel catalysed *cis*-polybutadiene by following steps: S21, adding butyl oil, nickel-based catalyst into the polymerization unit to obtain a nickel catalysed *cis-*polybutadiene liquid; S22, adding the nickel catalysed *cis*-polybutadiene liquid into the agglomeration unit to agglomerate, and obtaining the nickel catalysed *cis*-polybutadiene; and S3, preparing a rare earth catalysed *cis*-polybutadiene by following steps without cleaning the polymerization equipment: S31, adding butyl oil, rare earth-based catalyst into the polymerization unit to obtain a rare earth catalysed *cis*-polybutadiene liquid; S32, adding the rare earth catalysed *cis*-polybutadiene liquid into the agglomeration unit to agglomerate, and obtaining the rare earth catalysed *cis*-polybutadiene.

In the present disclosure, in the step S2 and step S3, the butyl oil includes a butadiene monomer and a solvent, a mass ratio of an oxygen containing compound of the butyl oil to the butyl oil is less than or equal to 20 mg : 1 kg, and a mass ratio of water of the butyl oil to the butyl oil is less than or equal to 50 mg : 1 kg.

In the present disclosure, Step S2 and step S3 are interchangeable, and an interchange is performed without stopping and cleaning the polymerization equipment, so that the polymerization is continuous.

Since the butadiene monomers and the solvent may contain impurities such as side products of preparation, and the butadiene monomer can be easily self-polymerized, a polymerization inhibitor can be added into the butadiene monomer to prevent the butadiene monomer from self-polymerizing. These impurities can affect the activity of the nickel-based catalyst and the rare-earth based catalyst. The influences of these impurities on the two kinds of catalysts are different, so that the polymerization equipment should be stopped and cleaned even if a same set of polymerization equipment can be used for preparing the nickel catalysed *cis*-polybutadiene and the rare earth catalysed *cis*-polybutadiene.

Therefore, in the present disclosure, concentration of oxygen containing compound and concentration of water in the butyl oil are controlled to reduce damage of the nickel-based catalyst and rare earth-based catalyst caused by the impurities, so as to protect the activity of rare earth-based catalyst after changing polymerization of nickel catalysed *cis*-polybutadiene to polymerization of rare earth catalysed *cis*-polybutadiene, and to protect the activity of nickel-based catalyst after changing polymerization of rare earth catalysed *cis*-polybutadiene to polymerization of nickel catalysed *cis-*polybutadiene.

Therefore, by continuously adding butyl oil into the polymerization unit while alternatively adding nickel-based catalyst and rare earth-based catalyst, preparation of nickel catalysed *cis*-polybutadiene and preparation of rare earth catalysed *cis*-polybutadiene can be alternatively carried out in a same set of polymerization equipment without stopping the preparation and cleaning the polymerization equipment. Besides, a conversion rate of the nickel catalysed *cis*-polybutadiene can be over 80%, and a conversion rate of the rare earth catalysed *cis*-polybutadiene can be over 90%. Both the activity of the nickel-based catalyst and the activity of the rare earth-based catalyst will not be affected.

Referring to FIG. 1, the polymerization equipment can further include a refining unit. In the refining unit 10, the butyl oil can be made from the butadiene monomers and the solvent, wherein the solvent can include at least one of an aliphatic hydrocarbon, an alicyclic hydrocarbon, and aromatic hydrocarbon.

In order to further protect the activity of the nickel-based catalyst and the rare earth-based catalyst after the interchange of the polymerization, the mass ratio of an oxygen containing compound of the butyl oil to the butyl oil can be less than or equal to 15 mg : 1 kg. In some embodiments, the mass ratio of an oxygen containing compound of the butyl oil to the butyl oil can be less than or equal to 10 mg : 1 kg. The mass ratio of water of the butyl oil to the butyl oil can be less than or equal to 40 mg : 1 kg.

In step S2 of preparing the nickel catalysed *cis*-polybutadiene, a Ni-Al aging liquid, a diluted B solution, butadiene monomers and the solvent can be added to polymerization unit together. Therefore, in the present disclosure, the step S21 of adding butyl oil, nickel-based catalyst into the polymerization unit to obtain the nickel catalysed *cis*-polybutadiene liquid includes following steps: mixing a nickel-containing agent and an aluminium-containing agent in a first aging unit 20 and aging to obtain a first aging liquid; mixing the butyl oil and the first aging liquid in a static mixer 40 to obtain a first mixture; and adding the first mixture into the polymerization unit 60, adding a boron-containing agent into the polymerization unit 60 via an independently boron-containing agent feed pipe 50, and polymerizing in the polymerization unit 60 to obtain the nickel catalysed *cis*-polybutadiene liquid.

Furthermore, the nickel-containing agent can include nickel naphthenate, and etc.; and the aluminium-containing agent can include boron trifluoride diethyl etherate, etc.

The step S3 of preparing the rare earth catalysed *cis*-polybutadiene can include following steps: S311 mixing a rare earth-based catalyst precursor in a second aging unit 30 to obtain the rare earth-based catalyst, and aging the obtained rare earth-based catalyst to obtain a second aging liquid; S312, mixing the butyl oil and the second aging liquid in a static mixer 40 to obtain a second mixture; and S313, adding the second mixture into the polymerization unit 60 and polymerizing to obtain the rare earth catalysed *cis*-polybutadiene liquid.

It could be understood that the first aging unit 20 and the second aging unit 30 can be an aging kettle.

Neodymium compound has the highest activity among rare earth-based catalyst. Therefore, neodymium compounds such as neodymium carboxylate can be used as a primary catalyst of the rare earth-based catalyst in some embodiments of the present disclosure. Moreover, the rare earth-based catalyst can further include a cocatalyst such as aluminium alkyl hydride, an activator such as chloroalkyl aluminium and an organic electron donor.

In some embodiments, the aluminium alkyl hydride can include at least one of diethyl aluminium hydride, dipropyl aluminium hydride, dibutyl aluminium hydride. The chloroalkyl aluminium can include at least one of an alkyl aluminium chloride having a formula of AlR₂Cl and a semialkyl aluminium chloride having a formula of Al₂R₃Cl₃.

Compared with the nickel-based catalyst, the rare earth-based catalyst is more complex to prepare, and conditions such as temperature, time, etc. for preparing the rare earth-based catalyst are much stricter. In order to better protect the activity of the rare earth-based catalyst after changing polymerization of nickel catalysed *cis-*polybutadiene to polymerization of rare earth catalysed *cis*-polybutadiene, in some embodiments, the mass ratio of the water in the butyl oil to the butyl oil can be less than or equal to 40mg : 1kg; in other embodiments, the mass ratio of the water in the butyl oil to the butyl oil can be less than or equal to 30mg : 1kg.

Specifically, step S3 of preparing the rare earth catalysed *cis*-polybutadiene can further include a following step: adding a terminator into the rare earth catalysed *cis*-polybutadiene. The terminator can be an alcohol compound, which can include at least one of methanol, ethanol, isopropanol, and tert-butyl alcohol.

Since a solvent discharged from an agglomeration unit 80, unreacted butadiene monomers, the terminator and etc., will be conveyed to the refining unit 10 for recycling, the terminator can recycle in the polymerization equipment. In addition, the terminator can affect the activity of the catalyst. Therefore, a mass of the terminator can be less than or equal to 5% of a mass of the butadiene monomer. In some embodiments, the mass of the terminator can be less than or equal to 2% of the mass of the butadiene monomer.

In industrial preparation, factors such as material, equipment, weather and the like can affect the activity of the reaction system. In order to maintain the activity of the reaction system, the step S3 of preparing the rare earth catalysed *cis*-polybutadiene can further include a following step of adding a first stabilizer into the static mixer 40 via a first stabilizer feed pipe 101, or a step of adding a second stabilizer into the polymerization unit 60 via a second stabilizer feed pipe 103. Both the first stabilizer and the second stabilizer can include aluminium alkyl or other kinds of catalyst active agents. In some embodiments, both a mass of the first stabilizer and a mass of the second stabilizer can be less than or equal to 0.05% of the mass of the butadiene monomer. In other embodiments, both the mass of the first stabilizer and the mass of the second stabilizer can be less than or equal to 0.03% of the mass of the butadiene monomer.

Moreover, in present disclosure, a molecular weight regulator can be added into the polymerization unit 60 via a molecular weight regulator feed pipe 102, so as to obtain rubber products with different molecular weights, thereby obtaining rubber products having different Mooney viscosities.

In some embodiments, the molecular weight regulator can include at least one of 1,2-butadiene, cyclooctadiene, aluminium alkyl, aluminium alkyl hydride and zinc alkyl. In some embodiments, a mass of the molecular weight regulator can be less than or equal to 0.5% of the mass of the butadiene monomer. In other embodiments, the mass of the molecular weight regulator can be less than or equal to 0.2% of the mass of the butadiene monomer.

The polymerization unit 60 can be one polymerization reactor, or can be at least two polymerization reactors in series. In the present disclosure, butyl oil is continuously added while producing *cis*-polybutadiene liquid, in order to prolong duration of the polymerization and improve conversion rate of the polymerization, the polymerization unit 60 can be at least two polymerization reactors in series. In some embodiments, the polymerization unit 60 can be at least three polymerization reactors in series.

Referring to FIG. 1, the polymerization unit 60 of the present disclosure can include a first polymerization reactor, a middle polymerization reactor and a last polymerization reactor in series. The butyl oil and the nickel-based catalyst, or the butyl oil and the rare earth-based catalyst can be added from a bottom of the first polymerization reactor 601. A *cis*-polybutadiene liquid can flow out from a top of the first polymerization reactor 601, and then flow into a bottom of the middle polymerization reactor 602. In this way, a nickel catalyzed *cis*-polybutadiene liquid or a rare earth catalyzed *cis*-polybutadiene liquid can flow out from a top of the polymerization reactor 603.

It should be noted that both the second stabilizer and the molecular weight regulator can be added into the polymerization unit 60 from the bottom of the first polymerization reactor 601.

In the present disclosure, after obtaining the nickel catalysed *cis-*polybutadiene liquid in the step S21 or obtaining the rare earth catalysed *cis-*polybutadiene liquid in the S31, a liquid anti-oxidant can be further added into the nickel catalysed *cis*-polybutadiene liquid or the rare earth catalysed *cis*-polybutadiene liquid.

In some embodiments, the liquid anti-oxidant can include at least one of anti-oxidant 1076, anti-oxidant 1520, anti-oxidant 7802 and anti-oxidant B7081L. In some embodiments, a mass of the liquid anti-oxidant can be less than or equal to 0.6% of the mass of the butadiene monomer. In other embodiments, the mass of the liquid anti-oxidant can be less than or equal to 0.2% of the mass of the butadiene monomer.

It should be noted that after obtaining the rare earth catalysed *cis-*polybutadiene liquid in step S31, a viscosity reducing agent can be added in the rare earth catalysed *cis*-polybutadiene liquid in the present disclosure.

In some embodiments, the viscosity reducing agent can be at least one of fatty acid and paraffin oil. In some embodiments, a mass of the viscosity reducing agent can be less than or equal to 1% of the mass of the butadiene monomer. In other embodiments, the mass of the viscosity reducing agent can be less than or equal to 0.5% of the mass of the butadiene monomer.

It should be noted that in the present disclosure, the polymerization unit can further include a terminating reactor. After the *cis*-polybutadiene liquid, the terminator, the viscosity reducing agent, and the liquid-antioxidant flowing out from the polymerization unit 60 can flow into the terminating reactor, be mixed evenly and stored in a storage tank.

In the present disclosure, the obtained nickel catalysed cis-polybutadiene liquid or the rare earth catalysed cis-polybutadiene liquid can be further conveyed to the agglomeration unit 80 to agglomerate. Moreover, in a post-processing unit, the resultant can be washed in a washing pot, dehydrated in a dehydrator and dried in a extrusion drier, thereby obtaining a nickel catalysed cis-polybutadiene or a rare earth catalysed cis-polybutadiene.

It should be noted that resultants such as the solvent, unreacted butadiene monomers and terminators and the like in the agglomeration unit 80 can be conveyed to the refining unit 10 again for recycling.

A method for continuously preparing nickel catalysed *cis*-polybutadiene and rare earth catalysed *cis*-polybutadiene will be further illustrated in conjunction with embodiments hereinafter.

### Embodiment 1

Neodymium neodecanoate, diethyl aluminium hydride, ethylaluminum sesquichloride and tetrahydrofuran were mixed to obtain a rare earth-based catalyst. A molar ratio of the neodymium neodecanoate, the diethyl aluminium hydride, the ethylaluminum sesquichloride and the tetrahydrofuran were 1:25:3:3. The rare earth-based catalyst was aged at 50 degree centigrade for 4 hours. At the same time, butadiene monomers were added into the refining unit at a flow rate of 7.1 m³/h, and the solvent was added into the refining unit at a flow rate of 28 m³/h, so as to prepare the butyl oil. A concentration of the butyl oil was 125.4 g/L, a mass ratio of an oxygen containing compound of the butyl oil to the butyl oil was controlled to be 8 mg : 1 kg, and a mass ratio of water of the butyl oil to the butyl oil was 25 mg : 1 kg. An aging liquid of the rare earth-based catalyst, the butyl oil and the stabilizer were added into a static mixer and mixed, wherein the aging liquid of the rare earth-based catalyst was added at a flow rate of 12 L/h; and the stabilizer was added at a flow rate of 16 L/h. A molar ratio of Nd and the butadiene monomers in the aging liquid of the rare earth-based catalyst was 1:10000. A mass ratio of the stabilizer and the butadiene monomers was 0.03 : 100. About two hours later, a terminator (added at a flow rate of 113.6 L/h), an anti-oxidant agent (added at a flow rate of 88 L/h) and a viscosity reducing agent (added at a flow rate of 24.7 L/h) were added into a discharge pipe of a last polymerization reactor. A mass ratio of the terminator to the butyl oil was 2:100, a mass ratio of the anti-oxidant to the butyl oil was 0.2:100, and a mass ratio of viscosity reducing agent to the butyl oil was 0.5:100. A molecular weight regulator was added according to Mooney viscosities of the *cis*-polybutadiene liquid in the first polymerization reactor and the last polymerization reactor, and the molecular weight regulator was added at a flow rate of 8.8 L/h, wherein a mass ratio of the molecular weight regulator to the butyl oil was 0.06:100. When the *cis*-polybutadiene liquid flowing out from the last polymerization reactor was all the rare earth catalysed *cis*-polybutadiene liquid, the *cis*-polybutadiene liquid was conveyed to an empty rubber tank. The *cis*-polybutadiene was then subjected to normal agglomeration process and post-processing process. 1 L rare earth catalysed *cis*-polybutadiene liquid was taken from the last polymerization reactor, heated, and dried by a hot roller method; and 117.3 g rare earth catalysed *cis*-polybutadiene was obtained, and the conversion rate of the rare earth catalysed *cis*-polybutadiene was 93.5%.

### Embodiment 2

On the basis of embodiment 1, the butyl oil was prepared from butadiene monomers and the solvent. The butadiene monomers were added into the refining unit at a flow rate of 8.8 m³/h, and the solvent were added into the refining unit at a flow rate of 28 m³/h, so as to prepare the butyl oil. A concentration of the butyl oil was 148.3 g/L, and a mass ratio of an oxygen containing compound of the butyl oil to the butyl oil was controlled to be 8 mg : 1 kg. The butadiene monomers were added along with water, and mass ratio of water of the butyl oil to the butyl oil was 40 mg : 1 kg.

Addition of the stabilizer, the molecular regulator and the aging liquid of the rare earth-based catalyst into the polymerization system was stopped. Addition of the terminator and viscosity reducing agent into the last polymerization reactor was stopped. A nickel containing agent and an aluminium containing agent were aged, and were mixed with the butyl oil in the static mixer, and then conveyed into the first polymerization reactor. A boron-containing agent (diluted boron-containing oil) was independently added into the first polymerization reactor at a flow rate of 1000 L/h. A molar ratio of the Ni, Al and B in the nickel-based catalysed was 0.9:0.31:0.9. About two hours later, an anti-oxidant was added in the discharge pipe at the flow rate of 109 L/h. A mass ratio of the anti-oxidant to the butyl oil was 0.2:100. When the *cis-*polybutadiene liquid flowing out from the last polymerization reactor was all the nickel catalysed *cis*-polybutadiene liquid, the *cis*-polybutadiene liquid was conveyed to an empty rubber tank. The *cis*-polybutadiene was then subjected to normal agglomeration process and post-processing process. 1 L nickel catalysed *cis*-polybutadiene liquid was taken from the last polymerization reactor, heated, and dried by a hot roller method; and 122.6 g nickel catalysed *cis*-polybutadiene was obtained, and the conversion rate of the nickel catalysed *cis*-polybutadiene was 82.7%.

### Embodiment 3

On the basis of embodiment 2, addition of the nickel-based catalyst into the polymerization system was stopped. The butadiene monomers were added into the refining unit at a lowered flow rate of 7.1 m³/h. A concentration of the butyl oil was 125.4 g/L, and a mass ratio of an oxygen containing compound of the butyl oil to the butyl oil was controlled to be 8 mg : 1 kg. The butadiene monomers were added without water, and mass ratio of water of the butyl oil to the butyl oil was 25 mg : 1 kg. An aging liquid of the rare earth-based catalyst, the butyl oil and the stabilizer were added into a static mixer and mixed again, wherein the aging liquid of the rare earth-based catalyst was added at a flow rate of 12 L/h; and the stabilizer was added at a flow rate of 16 L/h. A molar ratio of Nd and the butadiene monomers in the aging liquid of the rare earth-based catalyst was 1:10000. A mass ratio of the stabilizer and the butadiene monomers was 0.03:100. About two hours later, a terminator (added at a flow rate of 113.6 L/h), an anti-oxidant agent (added at a flow rate of 88 L/h) and a viscosity reducing agent (added at a flow rate of 24.7 L/h) were added into the discharge pipe of the last polymerization reactor. A mass ratio of the terminator to the butyl oil was 2:100, a mass ratio of the anti-oxidant to the butyl oil was 0.2:100, and a mass ratio of viscosity reducing agent to the butyl oil was 0.5:100. A molecular weight regulator was added according to Mooney viscosities of the *cis*-polybutadiene liquid in the first polymerization reactor and the last polymerization reactor, and the molecular weight regulator was added at a flow rate of 14.7 L/h, wherein a mass ratio of the molecular weight regulator to the butyl oil was 0.1:100. When the *cis*-polybutadiene liquid flowing out from the last polymerization reactor was all the rare earth catalysed *cis-*polybutadiene liquid, the *cis*-polybutadiene liquid was conveyed to an empty rubber tank. The *cis*-polybutadiene was then subjected to normal agglomeration process and post-processing process. 1 L rare earth catalysed *cis*-polybutadiene liquid was taken from the last polymerization reactor, heated, and dried by a hot roller method; and 114.6 g rare earth catalysed *cis*-polybutadiene was obtained, and the conversion rate of the rare earth catalysed *cis*-polybutadiene was 91.4%.

### Embodiment 4

Neodymium neodecanoate, diethyl aluminium hydride, ethylaluminum sesquichloride and tetrahydrofuran were mixed to obtain a rare earth-based catalyst. A molar ratio of the neodymium neodecanoate, the diethyl aluminium hydride, the ethylaluminum sesquichloride and the tetrahydrofuran were 1:25:3:3. The rare earth-based catalyst were aged at 50 degree centigrade for 4 hours.

One the basis of embodiment 2, addition of the nickel-based catalyst into the polymerization system was stopped. The butadiene monomers were added into the refining unit at a lowered flow rate of 7.1 m³/h. A concentration of the butyl oil was 125.4 g/L, and a mass ratio of an oxygen containing compound of the butyl oil to the butyl oil was controlled to be 8 mg : 1 kg. The butadiene monomers were added without water, and a mass ratio of water of the butyl oil to the butyl oil was 25 mg : 1 kg. An aging liquid of the rare earth-based catalyst and the butyl oil were added into a static mixer and mixed again, wherein the aging liquid of the rare earth-based catalyst was added at a flow rate of 12 L/h. A molar ratio of Nd and the butadiene monomers in the aging liquid of the rare earth-based catalyst was 1:10000. About two hours later, a terminator (added at a flow rate of 113.6 L/h), an anti-oxidant agent (added at a flow rate of 88 L/h) and a viscosity reducing agent (added at a flow rate of 24.7 L/h) were added into the discharge pipe of the last polymerization reactor. A mass ratio of the terminator to the butyl oil was 2:100, a mass ratio of the anti-oxidant to the butyl oil was 0.2:100, and a mass ratio of viscosity reducing agent to the butyl oil was 0.5:100. A molecular weight regulator was added according to Mooney viscosities of the *cis-*polybutadiene liquid in the first polymerization reactor and the last polymerization reactor, and the molecular weight regulator was added at a flow rate of 19.1 L/h, wherein a mass ratio of the molecular weight regulator to the butyl oil was 0.13:100. When the *cis*-polybutadiene liquid flowing out from the last polymerization reactor was all the rare earth catalysed *cis*-polybutadiene liquid, the *cis*-polybutadiene liquid was conveyed to an empty rubber tank. The *cis*-polybutadiene was then subjected to normal agglomeration process and post-processing process. 1 L rare earth catalysed *cis-*polybutadiene liquid was taken from the last polymerization reactor, heated, and dried by a hot roller method; and 113.7 g rare earth catalysed *cis*-polybutadiene was obtained, and the conversion rate of the rare earth catalysed *cis*-polybutadiene was 90.7%.

### Embodiment 5

Neodymium iso-octanoate, dipropyl aluminum hydride, ethylaluminum sesquichloride and tetrahydrofuran were mixed to obtain a rare earth-based catalyst. A molar ratio of the neodymium neodecanoate, the dipropyl aluminum hydride, the ethylaluminum sesquichloride and the tetrahydrofuran were 1:25:3:3. The rare earth-based catalyst were aged at 50 degree centigrade for 4 hours.

One the basis of embodiment 2, addition of the nickel-based catalyst into the polymerization system was stopped. The butadiene monomers were added into the refining unit at a lowered flow rate of 7.1 m³/h. A concentration of the butyl oil was 125.4 g/L, and a mass ratio of an oxygen containing compound of the butyl oil to the butyl oil was controlled to be 8 mg : 1 kg. The butadiene monomers were added without water, and a mass ratio of water of the butyl oil to the butyl oil was 25 mg : 1 kg. An aging liquid of the rare earth-based catalyst and the butyl oil were added into a static mixer and mixed again, wherein the aging liquid of the rare earth-based catalyst was added at a flow rate of 12 L/h. A molar ratio of Nd and the butadiene monomers in the aging liquid of the rare earth-based catalyst was 1:10000. About two hours later, a terminator (added at a flow rate of 113.6 L/h), an anti-oxidant agent (added at a flow rate of 88 L/h) and a viscosity reducing agent (added at a flow rate of 24.7 L/h) were added into the discharge pipe of the last polymerization reactor. A mass ratio of the terminator to the butyl oil was 2:100, a mass ratio of the anti-oxidant to the butyl oil was 0.2:100, and a mass ratio of viscosity reducing agent to the butyl oil was 0.5:100. A molecular weight regulator was added according to Mooney viscosities of the *cis-*polybutadiene liquid in the first polymerization reactor and the last polymerization reactor, and the molecular weight regulator was added at a flow rate of 24.9 L/h, wherein a mass ratio of the molecular weight regulator to the butyl oil was 0.17:100. When the *cis*-polybutadiene liquid flowing out from the last polymerization reactor was all the rare earth catalysed *cis*-polybutadiene liquid, the *cis*-polybutadiene liquid was conveyed to an empty rubber tank. The *cis*-polybutadiene was then subjected to normal agglomeration process and post-processing process. 1 L rare earth catalysed *cis-*polybutadiene liquid was taken from the last polymerization reactor, heated, and dried by a hot roller method; and 114.7 g rare earth catalysed *cis*-polybutadiene was obtained, and the conversion rate of the rare earth catalysed *cis*-polybutadiene was 91.5%.

### Comparative Embodiment 1

On the basis of embodiment 1, the butadiene monomers were added into the refining unit at an increased flow rate of 8.8 m³/h. A concentration of the butyl oil was 148.3 g/L, a mass ratio of an oxygen containing compound of the butyl oil to the butyl oil was controlled to be 28 mg : 1 kg. The butyl oil was added into a refining unit containing water, and a mass ratio of water of the butyl oil to the butyl oil was 40 mg : 1 kg.

Addition of the stabilizer, the molecular regulator and the aging liquid of the rare earth-based catalyst into the polymerization system was stopped. Addition of the terminator and viscosity reducing agent into the last polymerization reactor was stopped. A nickel containing agent and an aluminium containing agent were aged, and were mixed with the butyl oil in the static mixer, and then conveyed into the first polymerization reactor. A boron-containing agent (diluted boron-containing oil) was independently added into the first polymerization reactor at a flow rate of 1000 L/h. A molar ratio of the Ni, Al and B in the nickel-based catalysed was 0.9:0.31:0.9. About two hours later, an anti-oxidant was added in the discharge pipe at the flow rate of 109 L/h. A mass ratio of the anti-oxidant to the butyl oil was 0.2:100. When the *cis-*polybutadiene liquid flowing out from the last polymerization reactor was all the nickel catalysed *cis*-polybutadiene liquid, the *cis*-polybutadiene liquid was conveyed to an empty rubber tank. The *cis*-polybutadiene was then subjected to normal agglomeration process and post-processing process. 1 L nickel catalysed *cis*-polybutadiene liquid was taken from the last polymerization reactor, heated, and dried by a hot roller method; and 105.6 g nickel catalysed *cis*-polybutadiene was obtained, and the conversion rate of the nickel catalysed *cis*-polybutadiene was 71.2%.

Addition of the nickel-based catalyst into the polymerization system was stopped. The butadiene monomers were added into the refining unit at a lowered flow rate of 7.1 m³/h. A concentration of the butyl oil was 125.4 g/L, and a mass ratio of an oxygen containing compound of the butyl oil to the butyl oil was controlled to be 8 mg : 1 kg. The butadiene monomers was added into the refining unit without water, and mass ratio of water of the butyl oil to the butyl oil was 25 mg : 1 kg. An aging liquid of the rare earth-based catalyst, the butyl oil and the stabilizer were added into a static mixer and mixed again, wherein the aging liquid of the rare earth-based catalyst was added at a flow rate of 12 L/h; and the stabilizer was added at a flow rate of 16 L/h. A molar ratio of Nd and the butadiene monomers in the aging liquid of the rare earth-based catalyst was 1:10000. A mass ratio of the stabilizer and the butadiene monomers was 0.03:100. The activity of the reaction was so poor that the conversion rate of the polymerization was less than 20%.

### Comparative Embodiment 2

On the basis of embodiment 2, addition of the nickel-based catalyst into the polymerization system was stopped. The butadiene monomers were added into the refining unit at a lowered flow rate of 7.1 m³/h. A concentration of the butyl oil was 125.4 g/L and a mass ratio of an oxygen containing compound of the butyl oil to the butyl oil was controlled to be 28 mg : 1 kg; The butadiene monomers were added without water, and mass ratio of water of the butyl oil to the butyl oil was 25 mg : 1 kg. An aging liquid of the rare earth-based catalyst, the butyl oil and the stabilizer were added into a static mixer and mixed again, wherein the aging liquid of the rare earth-based catalyst was added at a flow rate of 12 L/h; and the stabilizer was added at a flow rate of 16 L/h. A molar ratio of Nd and the butadiene monomers in the aging liquid of the rare earth-based catalyst was 1:10000. A mass ratio of the stabilizer and the butadiene monomers was 0.03:100. About two hours later, a terminator (added at a flow rate of 113.6 L/h), an anti-oxidant agent (added at a flow rate of 88 L/h) and a viscosity reducing agent (added at a flow rate of 24.7 L/h) were added into the discharge pipe of the last polymerization reactor. A mass ratio of the terminator to the butyl oil was 2:100, a mass ratio of the anti-oxidant to the butyl oil was 0.2:100, and a mass ratio of viscosity reducing agent to the butyl oil was 0.5:100. A molecular weight regulator was added according to Mooney viscosities of the *cis*-polybutadiene liquid in the first polymerization reactor and the last polymerization reactor, and the molecular weight regulator was added at a flow rate of 54.3 L/h, wherein a mass ratio of the molecular weight regulator to the butyl oil was 0.37:100. When the *cis*-polybutadiene liquid flowing out from the last polymerization reactor was all the rare earth catalysed *cis-*polybutadiene liquid, the *cis*-polybutadiene liquid was conveyed to an empty rubber tank. The *cis*-polybutadiene was then subjected to normal agglomeration process and post-processing process. 1 L rare earth catalysed *cis*-polybutadiene liquid was taken from the last polymerization reactor, heated, and dried by a hot roller method; and 88.5 g rare earth catalysed *cis*-polybutadiene was obtained, and the conversion rate of the rare earth catalysed *cis*-polybutadiene was 70.6%.

Addition of the stabilizer, the molecular regulator and the aging liquid of the rare earth-based catalyst into the polymerization system was stopped. Addition of the terminator and viscosity reducing agent into the last polymerization reactor was stopped. The butadiene monomers were added into the refining unit at an increased flow rate of 8.8 m³/h. A concentration of the butyl oil was 148.3 g/L, and a mass ratio of an oxygen containing compound of the butyl oil to the butyl oil was controlled to be 8 mg : 1 kg. The butadiene monomers were added along with water, and mass ratio of water of the butyl oil to the butyl oil was 40 mg : 1 kg. A nickel containing agent and an aluminium containing agent were aged, and were mixed with the butyl oil in the static mixer, and then conveyed into the first polymerization reactor. A boron-containing agent (diluted boron-containing oil) was independently added into the first polymerization reactor at a flow rate of 1000 L/h. A molar ratio of the Ni, Al and B in the nickel-based catalysed was 0.9:0.31:0.9. The activity of the polymerization system was relatively poor, and the conversion rate was only 50%.

### Comparative Embodiment 3

On the basis of embodiment 1, the flow rate of the butadiene monomers added into the refining unit was increased to 8.8 m³/h. A concentration of the butyl oil was 148.3 g/L, and a mass ratio of an oxygen containing compound of the butyl oil to the butyl oil was controlled to be 8 mg : 1 kg. The butadiene monomers were added along with water, and mass ratio of water of the butyl oil to the butyl oil was controlled to be 65 mg : 1 kg.

Addition of the stabilizer, the molecular regulator and the aging liquid of the rare earth-based catalyst into the polymerization system was stopped. Addition of the terminator and viscosity reducing agent into the last polymerization reactor was stopped. A nickel containing agent and an aluminium containing agent were aged, and were mixed with the butyl oil in the static mixer, and then conveyed into the first polymerization reactor. A boron-containing agent (diluted boron-containing oil) was independently added into the first polymerization reactor at a flow rate of 1000 L/h. A molar ratio of the Ni, Al and B in the nickel-based catalysed was 0.9:0.31:0.9. About two hours later, an anti-oxidant was added in the discharge pipe at the flow rate of 109 L/h. A mass ratio of the anti-oxidant to the butyl oil was 0.2:100. When the *cis-*polybutadiene liquid flowing out from the last polymerization reactor was all the nickel catalysed *cis*-polybutadiene liquid, the *cis*-polybutadiene liquid was conveyed to an empty rubber tank. The *cis*-polybutadiene was then subjected to normal agglomeration process and post-processing process. 1L nickel catalysed *cis*-polybutadiene liquid was taken from the last polymerization reactor, heated, and dried by a hot roller method; and 109.4 g nickel catalysed *cis*-polybutadiene was obtained, and the conversion rate of the nickel catalysed *cis*-polybutadiene was 73.8%.

Addition of the nickel-based catalyst into the polymerization system was stopped. The flow rate of the butadiene monomers added was decreased to 7.1 m³/h. A concentration of the butyl oil was 125.4 g/L, and a mass ratio of an oxygen containing compound of the butyl oil to the butyl oil was controlled to be 8 mg : 1 kg. The butadiene monomers was added into the refining unit without water, and mass ratio of water of the butyl oil to the butyl oil was 25 mg : 1 kg. An aging liquid of the rare earth-based catalyst, the butyl oil and the stabilizer were added into a static mixer and mixed again, and conveyed to the first polymerization reactor, wherein the aging liquid of the rare earth-based catalyst was added at a flow rate of 12 L/h; and the stabilizer was added at a flow rate of 16 L/h. A molar ratio of Nd and the butadiene monomers in the aging liquid of the rare earth-based catalyst was 1:10000. A mass ratio of the stabilizer and the butadiene monomers was 0.03:100. The activity of the reaction was so poor that the conversion rate of the polymerization was less than 20%.

### Comparative Embodiment 4

On the basis of embodiment 2, addition of the nickel-based catalyst into the polymerization system was stopped. The butadiene monomers were added into the refining unit at a lowered flow rate of 7.1 m³/h. A concentration of the butyl oil was 125.4 g/L, and a mass ratio of an oxygen containing compound of the butyl oil to the butyl oil was controlled to be 8 mg : 1 kg; and mass ratio of water of the butyl oil to the butyl oil was 25 mg : 1 kg. An aging liquid of the rare earth-based catalyst, the butyl oil and the stabilizer were added into a static mixer and mixed again, wherein the aging liquid of the rare earth-based catalyst was added at a flow rate of 12 L/h; and the stabilizer was added at a flow rate of 16 L/h. A molar ratio of Nd and the butadiene monomers in the aging liquid of the rare earth-based catalyst was 1:10000. A mass ratio of the stabilizer and the butadiene monomers was 0.03:100. About two hours later, a terminator (added at a flow rate of 113.6 L/h), an anti-oxidant agent (added at a flow rate of 88 L/h) and a viscosity reducing agent (added at a flow rate of 24.7 L/h) were added into the discharge pipe of the last polymerization reactor. A mass ratio of the terminator to the butyl oil was 2:100, a mass ratio of the anti-oxidant to the butyl oil was 0.2:100, and a mass ratio of viscosity reducing agent to the butyl oil was 0.5:100. A molecular weight regulator was added according to Mooney viscosities of the *cis-*polybutadiene liquid in the first polymerization reactor and the last polymerization reactor, and the molecular weight regulator was added at a flow rate of 70.4 L/h, wherein a mass ratio of the molecular weight regulator to the butyl oil was 0.48:100. When the *cis*-polybutadiene liquid flowing out from the last polymerization reactor was all the rare earth catalysed *cis*-polybutadiene liquid, the *cis*-polybutadiene liquid was conveyed to an empty rubber tank. The *cis*-polybutadiene was then subjected to normal agglomeration process and post-processing process. 1 L rare earth catalysed *cis-*polybutadiene liquid was taken from the last polymerization reactor, heated, and dried by a hot roller method; and 82.4 g rare earth catalysed *cis*-polybutadiene was obtained, and the conversion rate of the rare earth catalysed *cis*-polybutadiene was 65.7%.

Addition of the stabilizer, the molecular regulator and the aging liquid of the rare earth-based catalyst into the polymerization system was stopped. Addition of the terminator and viscosity reducing agent into the last polymerization reactor was stopped. The butadiene monomers were added into the refining unit at an increased flow rate of 8.8 m³/h. A concentration of the butyl oil 148.3 g/L, and a mass ratio of an oxygen containing compound of the butyl oil to the butyl oil was controlled to be 8 mg : 1 kg. The butadiene monomers were added along with water, and mass ratio of water of the butyl oil to the butyl oil was 40 mg : 1 kg. A nickel containing agent and an aluminium containing agent were aged, and were mixed with the butyl oil in the static mixer, and then conveyed into the first polymerization reactor. A boron-containing agent (diluted boron-containing oil) was independently added into the first polymerization reactor at a flow rate of 1000 L/h. A molar ratio of the Ni, Al and B in the nickel-based catalysed was 0.9:0.31:0.9. The activity of the polymerization system was relatively poor, and the conversion rate was only 40%.

## Claims

1. A method for preparing nickel catalysed *cis*-polybutadiene and rare earth catalysed *cis*-polybutadiene, **characterized by** comprising:
S 1, providing a set of polymerization equipment comprising a polymerization unit and an agglomeration unit;
S2, preparing a nickel catalysed *cis*-polybutadiene by following steps:
S21, adding butyl oil, nickel-based catalyst into the polymerization unit to obtain a nickel catalysed *cis*-polybutadiene liquid;
S22, adding the nickel catalysed *cis*-polybutadiene liquid into the agglomeration unit to agglomerate, and obtaining the nickel catalysed *cis*-polybutadiene; and
S3, preparing a rare earth catalysed *cis*-polybutadiene by following steps:
S31, adding butyl oil, rare earth-based catalyst into the polymerization unit to obtain a rare earth catalysed *cis*-polybutadiene liquid;
S32, adding the rare earth catalysed *cis*-polybutadiene liquid into the agglomeration unit to agglomerate, and obtaining the rare earth catalysed *cis-*polybutadiene,
wherein in the step S2 and step S3, the butyl oil comprises a butadiene monomer and a solvent, a mass ratio of an oxygen containing compound of the butyl oil to the butyl oil is less than or equal to 20 mg : 1 kg, and a mass ratio of water of the butyl oil to the butyl oil is less than or equal to 50 mg : 1 kg, and
step S2 and step S3 are interchangeable, and an interchange is performed without stopping and cleaning the polymerization equipment, i.e., the polymerization is continuous.

2. The method of claim 1, wherein the polymerization equipment further comprises a refining unit and the butyl oil is prepared by refining the butadiene monomer and the solvent in the refining unit.

3. The method of claim 1, wherein the step S21 of adding butyl oil, nickel-based catalyst into the polymerization unit to obtain the nickel catalysed *cis*-polybutadiene liquid comprises following steps:
S211, mixing a nickel-containing agent and an aluminium-containing agent in a first aging unit and aging to obtain a first aging liquid;
S212, mixing the butyl oil and the first aging liquid in a static mixer to obtain a first mixture; and
S213, adding the first mixture and a boron-containing agent into the polymerization unit and polymerizing to obtain the nickel catalysed *cis*-polybutadiene liquid.

4. The method of claim 1, wherein in the step S3, a mass ratio of water of the butyl oil to the butyl oil is less than or equal to 40 mg : 1 kg.

5. The method of claim 3, wherein the step S31 of adding butyl oil, rare earth-based catalyst into the polymerization unit to obtain the rare earth catalysed *cis-*polybutadiene liquid comprises following steps:
S311, mixing a rare earth-based catalyst precursor in a second aging unit to obtain the rare earth-based catalyst, and aging the obtained rare earth-based catalyst to obtain a second aging liquid;
S312, mixing the butyl oil and the second aging liquid in a static mixer to obtain a second mixture; and
S313, adding the second mixture into the polymerization unit and polymerizing to obtain the rare earth catalysed *cis*-polybutadiene liquid.

6. The method of claim 5, wherein in the step S312, further adding a first stabilizer into the static mixer, wherein the first stabilizer comprises aluminium alkyl

7. The method of claim 5, wherein in the step S313, further adding a second stabilizer into the polymerization unit, wherein the second stabilizer comprises aluminium alkyl.

8. The method of claim 1, wherein the step S3 of preparing the rare earth catalysed *cis*-polybutadiene further comprises adding a terminator into the rare earth catalysed *cis*-polybutadiene.

9. The method of claim 8, wherein a mass of the terminator is less than or equal to 5% of a mass of the butadiene monomer.

10. The method of claim 1, wherein in the step S21 and step S31, further comprising adding a molecular weight regulator into the polymerization unit, wherein the molecular weight regulator comprises at least one of 1,2-butadiene, cyclooctadiene, aluminium alkyl, aluminium alkyl hydride and zinc alkyl.

11. The method of claim 1, wherein after step S32, further comprising a step of adding a viscosity reducing agent into the rare earth catalysed *cis*-polybutadiene liquid.

12. The method of claim 1, wherein after step S21 and before step S22, further comprising a step of adding a liquid anti-oxidant into the nickel catalysed *cis-*polybutadiene liquid.

13. The method of claim 1, wherein after step S31 and before step S32, further comprising a step of adding an anti-oxidant into the rare earth catalysed *cis-*polybutadiene liquid.

## Patentansprüche

1. Verfahren zur Herstellung von nickelkatalysiertem cis-Polybutadien und seltenerdkatalysiertem cis-Polybutadien, **dadurch gekennzeichnet, dass** es umfasst:
S1, Bereitstellen eines Satzes von Polymerisationsausrüstungen umfassend eine Polymerisationseinheit und eine Agglomerationseinheit;
S2, Herstellen eines nickelkatalysierten cis-Polybutadiens durch folgende Schritte:
S21, Hinzufügen von Butylöl, nickelbasiertem Katalysator in die Polymerisationseinheit, um eine nickelkatalysierte cis-Polybutadienflüssigkeit zu gewinnen;
S22, Hinzufügen der nickelkatalysierten cis-Polybutadienflüssigkeit in die Agglomerationseinheit, um zu agglomerieren, und Gewinnen des nickelkatalysiertem cis-Polybutadiens; und
S3, Herstellen eines seltenerdkatalysierten cis-Polybutadiens durch folgende Schritte:
S31, Hinzufügen von Butylöl, seltenerdbasiertem Katalysator in die Polymerisationseinheit, um eine seltenerdkatalysierte cis-Polybutadienflüssigkeit zu gewinnen;
S32, Hinzufügen der seltenerdkatalysierten cis-Polybutadienflüssigkeit in die Agglomerationseinheit, um zu agglomerieren, und Gewinnen des seltenerdkatalysiertem cis-Polybutadiens,
worin im Schritt S2 und im Schritt S3 das Butylöl ein Butadienmonomer und ein Lösungsmittel umfasst, ein Masseverhältnis einer sauerstoffhaltigen Verbindung des Butylöls zum Butylöl kleiner als oder gleich wie 20 mg : 1 kg ist, und ein Masseverhältnis des Wassers des Butylöls zum Butylöl kleiner als oder gleich wie 50 mg : 1 kg ist, und
Schritt S2 und Schritt S3 austauschbar sind, und ein Austausch ohne das Anhalten und das Reinigen der Polymerisationsausrüstungen durchgeführt wird, d.h. die Polymerisation ist kontinuierlich.

2. Verfahren nach Anspruch 1, worin die Polymerisationsausrüstungen ferner eine Raffinierungseinheit umfassen und das Butylöl durch Raffinieren des Butadienmonomers und des Lösungsmittels in der Raffinierungseinheit hergestellt wird.

3. Verfahren nach Anspruch 1, worin der Schritt S21 des Hinzufügens von Butylöl, nickelbasiertem Katalysator in die Polymerisationseinheit, um die nickelkatalysierte cis-Polybutadienflüssigkeit zu gewinnen, folgende Schritte umfasst:
S211, Mischen eines nickelhaltigen Mittels und eines aluminiumhaltigen Mittels in einer ersten Alterungseinheit und Altern, um eine erste Alterungsflüssigkeit zu gewinnen;
S212, Mischen des Butylöls und der ersten Alterungsflüssigkeit in einem statischen Mischer, um eine erste Mischung zu gewinnen; und
S213, Hinzufügen der ersten Mischung und eines borhaltigen Mittels in die Polymerisationseinheit und Polymerisieren, um die nickelkatalysierte cis-Polybutadienflüssigkeit zu gewinnen.

4. Verfahren nach Anspruch 1, worin im Schritt S3 ein Masseverhältnis des Wassers des Butylöls zum Butylöl kleiner als oder gleich wie 40 mg : 1 kg ist.

5. Verfahren nach Anspruch 3, worin der Schritt S31 des Hinzufügens von Butylöl, seltenerdbasiertem Katalysator in die Polymerisationseinheit, um die seltenerdkatalysierte cis-Polybutadienflüssigkeit zu gewinnen, folgende Schritte umfasst:
S311, Mischen eines seltenerdbasierten Katalysator-Vorläufers in einer zweiten Alterungseinheit, um den seltenerdbasierten Katalysator zu gewinnen, und Altern des gewonnenen seltenerdbasierten Katalysators, um eine zweite Alterungsflüssigkeit zu gewinnen;
S312, Mischen des Butylöls und der zweiten Alterungsflüssigkeit in einem statischen Mischer, um eine zweite Mischung zu gewinnen; und
S313, Hinzufügen der zweiten Mischung in die Polymerisationseinheit und Polymerisieren, um die seltenerdkatalysierte cis-Polybutadienflüssigkeit zu gewinnen.

6. Verfahren nach Anspruch 5, worin im Schritt S312, ferner Hinzufügen eines ersten Stabilisators in den statischen Mischer, worin der erste Stabilisator Aluminiumalkyl umfasst.

7. Verfahren nach Anspruch 5, worin im Schritt S313, ferner Hinzufügen eines zweiten Stabilisators in die Polymerisationseinheit, worin der zweite Stabilisator Aluminiumalkyl umfasst.

8. Verfahren nach Anspruch 1, worin der Schritt S3 des Herstellens des seltenerdkatalysierten cis-Polybutadiens ferner das Hinzufügen eines Terminators in das seltenerdkatalysierte cis-Polybutadien umfasst.

9. Verfahren nach Anspruch 8, worin eine Masse des Terminators kleiner als oder gleich wie 5% einer Masse des Butadienmonomers ist.

10. Verfahren nach Anspruch 1, worin im Schritt S21 und Schritt S31, ferner umfassend das Hinzufügen eines Molekulargewichtsregulators in die Polymerisationseinheit, worin der Molekulargewichtsregulator zumindest eines von 1,2-Butadien, Cyclooctadien, Aluminiumalkyl, Aluminiumalkylhydrid und Zinkalkyl umfasst.

11. Verfahren nach Anspruch 1, worin nach dem Schritt S32, ferner umfassend einen Schritt des Hinzufügens eines Viskositätsreduktionsmittels in die seltenerdkatalysierte cis-Polybutadienflüssigkeit.

12. Verfahren nach Anspruch 1, worin nach dem Schritt S21 und vor dem Schritt S22, ferner umfassend einen Schritt des Hinzufügens eines flüssigen Antioxidationsmittels in die nickelkatalysierte cis-Polybutadienflüssigkeit.

13. Verfahren nach Anspruch 1, worin nach dem Schritt S31 und vor dem Schritt S32, ferner umfassend einen Schritt des Hinzufügens eines Antioxidationsmittels in die seltenerdkatalysierte cis-Polybutadienflüssigkeit.

## Revendications

1. Procédé de préparation de *cis*-polybutadiène catalysé par du nickel et de *cis-*polybutadiène catalysé par des terres rares, **caractérisé en ce qu'**il consiste à :
S1, fournir un ensemble d'équipement de polymérisation comprenant une unité de polymérisation et une unité d'agglomération ;
S2, préparer un *cis*-polybutadiène catalysé par du nickel par les étapes suivantes :
S21, ajouter de l'huile de butyle, un catalyseur à base de nickel dans l'unité de polymérisation pour obtenir un liquide de *cis*-polybutadiène catalysé par du nickel ;
S22, ajouter le liquide de *cis*-polybutadiène catalysé par du nickel dans l'unité d'agglomération pour agglomérer, et obtenir le *cis*-polybutadiène catalysé par du nickel ; et
S3, préparer un *cis*-polybutadiène catalysé par des terres rares par les étapes suivantes :
S31, ajouter de l'huile de butyle, un catalyseur à base de terres rares dans l'unité de polymérisation pour obtenir un liquide de *cis*-polybutadiène catalysé par des terres rares ;
S32, ajouter le liquide de *cis*-polybutadiène catalysé par des terres rares dans l'unité d'agglomération pour agglomérer, et obtenir le *cis*-polybutadiène catalysé par des terres rares,
dans lequel aux étapes S2 et S3, l'huile de butyle comprend un monomère de butadiène et un solvant, un rapport massique entre un composé contenant de l'oxygène de l'huile de butyle et l'huile de butyle est inférieur ou égal à 20 mg : 1 kg, et un rapport massique entre l'eau de l'huile de butyle et l'huile de butyle est inférieur ou égal à 50 mg : 1 kg, et les étapes S2 et S3 sont interchangeables, et un échange est effectué sans arrêter et nettoyer l'équipement de polymérisation, c'est-à-dire que la polymérisation est continue.

2. Procédé selon la revendication 1, dans lequel l'équipement de polymérisation comprend en outre une unité de raffinage et l'huile de butyle est préparée en raffinant le monomère de butadiène et le solvant dans l'unité de raffinage.

3. Procédé selon la revendication 1, dans lequel l'étape S21 consistant à ajouter de l'huile de butyle, un catalyseur à base de nickel dans l'unité de polymérisation pour obtenir le liquide de *cis*-polybutadiène catalysé par du nickel comprend les étapes suivantes :
S211, mélanger un agent contenant du nickel et un agent contenant de l'aluminium dans une première unité de vieillissement et laisser vieillir pour obtenir un premier liquide de vieillissement ;
S212, mélanger l'huile de butyle et le premier liquide de vieillissement dans un mélangeur statique pour obtenir un premier mélange ; et
S213, ajouter le premier mélange et un agent contenant du bore dans l'unité de polymérisation et polymériser pour obtenir le liquide de *cis*-polybutadiène catalysé par du nickel.

4. Procédé selon la revendication 1, dans lequel, à l'étape S3, un rapport massique entre l'eau de l'huile de butyle et l'huile de butyle est inférieur ou égal à 40 mg : 1 kg.

5. Procédé selon la revendication 3, dans lequel l'étape S31 consistant à ajouter de l'huile de butyle, un catalyseur à base de terres rares dans l'unité de polymérisation pour obtenir le liquide de *cis*-polybutadiène catalysé par des terres rares comprend les étapes suivantes :
S311, mélanger un précurseur de catalyseur à base de terres rares dans une seconde unité de vieillissement pour obtenir le catalyseur à base de terres rares, et laisser vieillir le catalyseur à base de terres rares obtenu pour obtenir un second liquide de vieillissement ;
S312, mélanger l'huile de butyle et le second liquide de vieillissement dans un mélangeur statique pour obtenir un second mélange ; et
S313, ajouter le second mélange dans l'unité de polymérisation et polymériser pour obtenir le liquide de *cis*-polybutadiène catalysé par des terres rares.

6. Procédé selon la revendication 5, dans lequel, à l'étape S312, on ajoute en outre un premier stabilisant dans le mélangeur statique, où le premier stabilisant comprend un alkyle d'aluminium ;

7. Procédé selon la revendication 5, dans lequel, à l'étape S313, on ajoute en outre un second stabilisant dans l'unité de polymérisation, où le second stabilisant comprend un alkyle d'aluminium.

8. Procédé selon la revendication 1, dans lequel l'étape S3 consistant à préparer du *cis-*polybutadiène catalysé par des terres rares consiste en outre à ajouter un terminateur dans le *cis* -polybutadiène catalysé par des terres rares.

9. Procédé selon la revendication 8, dans lequel une masse du terminateur est inférieure ou égale à 5 % d'une masse du monomère de butadiène.

10. Procédé selon la revendication 1, dans lequel aux étapes S21 et S31, consistant en outre à ajouter un régulateur de poids moléculaire dans l'unité de polymérisation, dans lequel le régulateur de poids moléculaire comprend au moins l'un parmi le 1,2-butadiène, le cyclooctadiène, l'alkyle d'aluminium, l'hydrure d'alkyle d'aluminium et l'alkyle de zinc.

11. Procédé selon la revendication 1, dans lequel après l'étape S32, comprenant en outre une étape d'addition d'un agent réducteur de viscosité dans le liquide de *cis*-polybutadiène catalysé par des terres rares.

12. Procédé selon la revendication 1, dans lequel après l'étape S21 et avant l'étape S22, comprenant en outre une étape d'addition d'un antioxydant liquide dans le liquide de *cis-*polybutadiène catalysé par du nickel.

13. Procédé selon la revendication 1, dans lequel après l'étape S31 et avant l'étape S32, comprenant en outre une étape d'addition d'un antioxydant dans le liquide de *cis-*polybutadiène catalysé par des terres rares.
